# EUROPEAN PATENT SPECIFICATION

(11) **EP 4 326 537 B1**
(45) Date of publication and mention of the grant of the patent: **30.07.2025**
(21) Application number: 22722135.5
(22) Date of filing: 07.04.2022
(51) Int. Cl.: B29C 65/18, B31D 5/00, B31B 70/64, B31B 70/02, B29C 65/00, B29C 65/78, B29L 31/00

(54) **WELDING MACHINE**
SCHWEISSMASCHINE
MACHINE À SOUDER

(30) Priority: 19.04.2021 DK PA202170179
(43) Date of publication of application: 28.02.2024
(73) Proprietor: Roll-o-Matic A/S, 5492 Vissenbjerg (DK)
(72) Inventor: JENSEN, Søren, 5450 Otterup (DK); JENSEN, John Buk, 5330 Munkebo (DK)
(74) Representative: Zacco Denmark A/S
(86) International application number: PCT/EP2022/059297
(87) International publication number: WO 2022/223310

(56) References cited:
- EP-A2- 0 841 148
- EP-A2- 1 302 306
- CA-A1- 2 205 827
- US-A- 3 996 093

## Description

The present disclosure relates to a welding machine for continuous welding of two layers of plastic film material together in a welding pattern for the creation of e.g. air cushion film for producing air cushions by inflating the closed pockets of the air cushion film for protection by cushioning of goods packed for transportation. Furthermore, a method is disclosed for producing a film comprising two layers of plastic film welded together in a two-dimensional pattern by means of such machine.

### Background

Machines for welding of two layers of plastic film material together are known in the art operating in generally by two different principles of welding. One is a stop-and-go principle where two layers of overlaid plastic film are moved discontinuously on top of an anvil plate and briefly halted in position, when heated welding means are pressed on top of the overlaid film to weld the two layers of film together in a pattern defined by the layout of the welding means. Another is continuous welding, where the heated welding means are situated on the periphery of a rotating welding drum and the two layers of overlaid plastic film are moved continuously past the welding drum tangential to the drum and the welding takes place during contact between the plastic films and the heated welding means. The two layers of plastic film material may be in the form of separate layers or in the form of a tubular film.

Such continuous welding is known from US 7,699,765 B2, where the layers of overlaid plastic film are moved along half of the periphery of the welding drum guided and tensioned against the periphery of the drum by two web guidance rollers situated close to the rotating welding drum at opposite sides of it. The heated welding means are bars extending parallel to the axis of rotation of the drum.

An alternative continuous welding process is disclosed in US 4,023,470 where the two layers of film are guided along a driven cylinder with a plurality of anvil bars extending on the peripheral surface parallel to the axis of rotation, and a second rotating welding device having a parallel axis of rotation comprises heated welding bars extending parallel to the anvil bars, and a heat seam is formed between the overlaid plastic films as they passes the point of contact between the welding bars and the anvil bars.

In CA 2,205,827 a heated welding drum and an anvil drum are employed for continuous welding of two overlaid layers of plastic film material, where the anvil drum is pressed against the welding drum and the welding seam is formed when the web of plastic film passes the nip between the anvil drum and the heated welding drum. Web guidance rollers are arranged to maintain the web in contact with the heated surface of the welding drum over a peripheral extend of about 180° in order to preheat the web prior to the welding at the nip. During start and stop of the continuous welding process, the continuous movement of the web is halted, the anvil drum is lifted away from the heated welding drum and two or more web saver rollers are moved to lift the web of plastic film away from the heated surface of the welding drum in order to prevent the web to thermally deform or melt when the web is no longer in a continuous movement with respect to the peripheral surface of the heated welding drum.

In the continuous welding machine shown in EP 1 593 487, a stretchable tensioning band is employed to press a web of a tubular film towards a rotating welding drum over half of the peripheral extend of the welding drum. The welding drum has a plurality of heated welding bars extending on the peripheral surface parallel to the axis of rotation, and the tensioning band ensures a sufficient tangential pressure on the web towards the welding bars for a time sufficiently long for a welded seam to be formed between the two layers of plastic film material of the tubular film.

It is also known in the art of continuous welding machines to use a rotating welding drum with a plurality of heated welding bars extending on the peripheral surface parallel to the axis of rotation, wherein the welding bars can be retracted into the drum and away from the peripheral surface in order to prevent direct contact with the web during start up and shut down of operation of the welding machine. A further welding machine is disclosed in US 3 996 093 A.

It is an objective of the present disclosure to provide a welding machine for continuous welding of two layers of plastic film material together in a welding pattern, where the switching between a production mode of operation of the welding machine and a stop of operation of the welding machine is improved.

### Brief description of the disclosure

The present invention relates to a welding machine for continuous welding of two layers of plastic film material together in a welding pattern, the machine comprising
a welding drum which is arranged to be rotated around its axis,
welding means arranged on the peripheral surface of the welding drum and exhibiting the welding pattern,
heating arrangement arranged to heat the welding means to a welding temperature,
an endless welding band,
a set of band guidance rollers comprising a first application roller and a second application roller arranged to apply the welding band to the welding means on the surface of the welding drum over a peripheral extend of at least 90°, preferably at least 180° of the welding drum with a force radial to the welding drum in a first operational mode of the welding machine, the set of band guidance rollers comprising at least one displaceable tensioning roller for maintaining a tension of the welding band,
a web guidance arrangement for guiding the two layers of plastic film material in between the welding drum and the welding band, and
control means for controlling the operation of the welding machine, wherein the machine comprises one or more separation rollers, and is arranged in a second operational mode of the welding machine to displace the one or more separation rollers by means of separation roller displacement means controlled by the control means, from a first position thereof and in between the welding means on the peripheral surface of the welding drum and the two layers of plastic film material to a second position of the one or more separation rollers where the two layers of plastic film material and the welding band are separated from the periphery of the welding drum by means of the separation rollers.

With continuous welding is understood that a web of the two layers of plastic film material can be fed continuously through the welding machine and past the welding means of the machine, as opposed to stop-and-go welding.

The two layers of plastic film material, i.e. the web, may comprise to separate layers of a heat-weldable plastic film material, in particular a thermoplastic film, or it may comprise a tubular film of heat-weldable plastic film material. The individual film layer is preferably of a thickness in the range of 10 to 50 microns, in particular in the range of 15 to 40 microns, where the use of a thermoplastic material as High Density Polyethylene (HDPE) allows for more sustainable air cushions at a lower film thickness than e.g. the use of Low Density Polyethylene (LDPE). Alternatively, a polyester or polypropylene film may be employed.

The welding pattern of the welding means may comprise welding bars extending in a direction parallel to the axis of the welding drum, but the present invention is more advantageous to use with a more complex welding pattern extending in both the axial direction and the peripheral direction of the cylindrical surface of the welding drum.

The heating arrangement arranged to heat the welding means to a welding temperature may comprise electrical heating means applied directly to the welding means or may include a heat transferring medium such as a heated oil that is circulated to heat the welding means.

The endless welding band is provided for applying a pressure force on the web of plastic films towards the welding means over a substantial extend of the periphery of the welding means on the welding drum, whereby the heat transfer from the welding means to the web takes place over a longer period of time, thus providing for a higher velocity of the web during production operation of the welding machine.

The first operational mode is a production mode of the welding machine, whereas the second operational mode, where the one or more separation rollers is displaced in between the welding means on the peripheral surface of the welding drum and the two layers of plastic film material to a second position where the two layers of plastic film material and the welding band are separated from the periphery of the welding drum is a transitional mode from the first operational mode to a stop of operation of the welding machine. The second operational mode can also be reversed for the welding machine to go from a stopped mode to the first operational mode.

By the present invention, it is achieved to temporarily remove the web of plastic films as well as the means for pressuring the web against the welding means of the welding drum, i.e. the welding band, in one procedure by means of moving the separation rollers. This is particularly advantageous when the the welding means are not easily retractable, such as when the welding pattern constitutes a two-dimentional welding pattern that spans at least 180° of the peripheral surface of the welding drum.

It is preferred that the welding machine comprises at least two separation rollers because the machine can be constructed to be more compact of design that a welding machine comprising only one separation roller and the means for displacing the separation rollers may be formed more simple.

It is particularly preferred that the welding machine is arranged so that the two layers of plastic film material extend flush with the welding band between the two separation rollers in the second operational mode of the welding machine.

The welding pattern of the welding means extends in the transverse direction parallel to the axis of the welding drum as well as in the curved direction perpendicularly to the transverse direction, i.e. a two-dimensional welding pattern, and spans at least 180°, preferably at least 270° of the peripheral surface of the welding drum. Even more preferred, the welding pattern extends substantially continuously throughout the peripheral surface of the welding drum to provide a substantially continuously welding pattern to the two layers of plastic film material.

The present invention is particularly advantageous with a welding pattern of the welding means extending in the transverse direction parallel to the axis of the welding drum as well as in the curved direction perpendicularly to the transverse direction, i.e. in a two-dimensional welding pattern, because such pattern is very difficult to retract from the surface of the welding drum during stop and start of the continuous welding process and the present invention provides an alternative to such solution, where the web of layers of plastic film material can be temporarily removed from the welding means by means of the one or more separation rollers.

The welding pattern of the welding means is preferably designed to form closed pockets between the two layers of plastic film material so as to provide inflatable pockets.

In another design, the welding means is designed to form connected pockets between the two layers of plastic film material so as to provide ice cube bags.

The first application roller and the second application roller are preferably arranged to be displaceable by means of application roller displacement means controlled by the control means between a first position thereof in the first operational mode of the welding machine and a second position of the first application roller and the second application roller in the second operational mode of the welding machine to accommodate the displacement of the at least one separation roller from the first position thereof and to the second position of the at least one separation roller.

The first application roller and the second application roller are preferably arranged to apply the welding band to the welding means on the surface of the welding drum over a peripheral extend of at least 270°, preferably of at least 300° of the welding drum.

The welding machine preferably further comprises at least one pressure drum which is arranged to, in the first operational mode of the welding machine, provide a pressure force on the welding band towards the welding drum within the peripheral extend where the welding band is applied to the welding drum, wherein the at least one pressure drum is arranged to be displaceable by means of a pressure drum displacement means controlled by the control means, between a first position thereof in the first operational mode of the welding machine and a second position of the pressure roller in the second operational mode of the welding machine to allow for the two layers of plastic film material and the welding band to be separated from the periphery of the welding drum by means of the separation rollers. The purpose of the at least one pressure drum is to increase the pressure force on the web of plastic films towards the welding means on the welding drum, whereby the heat transfer from the welding means to the web increases at the position of the one or more pressure drums, thus providing for a higher velocity of the web during production operation of the welding machine.

The present invention furthermore relates to a method of producing a web comprising two layers of plastic film material being welded together in a two-dimensional welding pattern forming pockets between the two layers of plastic film material by use of a welding machine as disclosed herein, wherein the welding pattern of the produced web is formed by means of the welding means on the welding drum.

The pockets formed between the two layers of plastic film material are preferably closed pockets so that the produced web is an air cushion film for subsequent forming of air cushions.

In a further aspect, the present disclosure relates to a welding machine for continuous welding of two layers of plastic film material together in a welding pattern, the machine comprising
a welding drum which is arranged to be rotated around its axis,
welding means arranged on the peripheral surface of the welding drum and exhibiting the welding pattern,
heating arrangement arranged to heat the welding means to a welding temperature,
an endless welding band,
a set of band guidance rollers comprising a first application roller and a second application roller arranged to apply the welding band to the welding means on the surface of the welding drum over a peripheral extend of at least 90°, preferably at least 180° of the welding drum with a force radial to the welding drum in a first operational mode of the welding machine, the set of band guidance rollers comprising at least one displaceable tensioning roller for maintaining a tension of the welding band,
a web guidance arrangement for guiding the two layers of plastic film material in between the welding drum and the welding band, and
control means for controlling the operation of the welding machine, wherein the welding machine further comprises at least one pressure drum which is arranged to provide a pressure force on the welding band towards the welding drum within the peripheral extend where the welding band is applied to the welding drum.

The endless welding band is provided for applying a pressure force on the web of plastic films towards the welding means over a substantial extend of the periphery of the welding means on the welding drum, whereby the heat transfer from the welding means to the web takes place over a longer period of time, thus providing for a higher velocity of the web during production operation of the welding machine. The purpose of the at least one pressure drum is to increase the pressure force on the web of plastic films towards the welding means on the welding drum, whereby the heat transfer from the welding means to the web increases at the position of the one or more pressure drums, thus providing for a higher velocity of the web during production operation of the welding machine.

It is preferred that the at least one pressure drum is arranged to be displaceable by means of a pressure drum displacement means controlled by the control means. Also, the welding machine comprising at least two pressure drums.

The first application roller and the second application roller are preferably arranged to apply the welding band to the welding means on the surface of the welding drum over a peripheral extend of at least 270°, preferably of at least 300° of the welding drum.

The welding pattern of the welding means extends in the transverse direction parallel to the axis of the welding drum as well as in the curved direction perpendicularly to the transverse direction, i.e. a two-dimensional welding pattern, and spans at least 180°, preferably at least 270° of the peripheral surface of the welding drum. Even more preferred, the welding pattern extends substantially continuously throughout the peripheral surface of the welding drum to provide a substantially continuously welding pattern to the two layers of plastic film material.

### Brief description of the drawings

Examples of the present invention are shown in the figures, of which
Figure 1 shows a first example of a welding machine in a first operational mode being a production mode,
Figure 2 shows the machine of figure 1 in a transition mode between a production mode and a stop of production,
Figure 3 shows the machine of figure 1 and 2 in a stop of production,
Figure 4 shows a second example of a welding machine in a stop of production, and
Figure 5 shows a third example of a welding machine in a stop of production mode.

### Detailed description of the examples

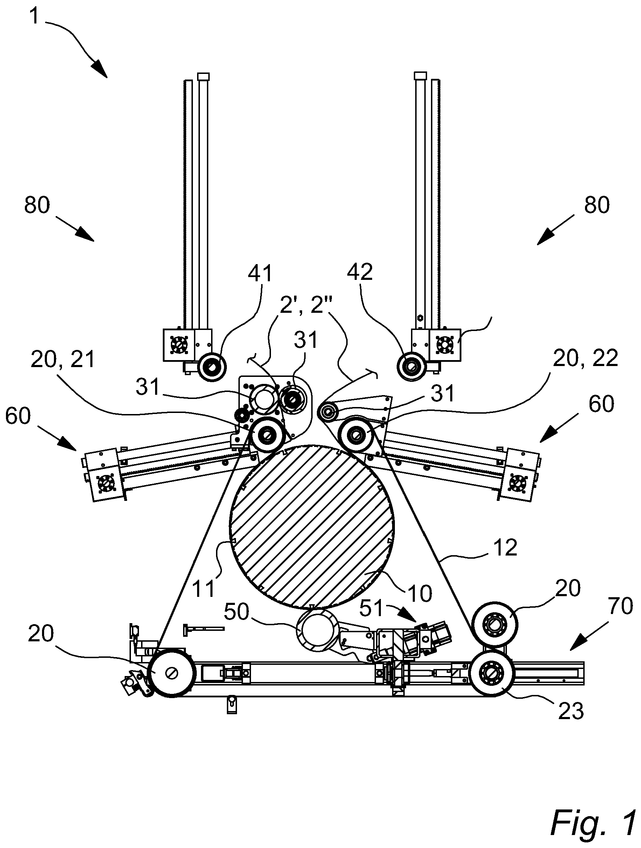

The welding machine 1 shown in figures 1, 2 and 3 comprises a welding drum 10 having heated welding means 11 on its peripheral surface for continuous welding of a web of two layers of plastic film material 2', 2" together in a welding pattern which forms closed pockets between the two layers for the production of an air cushion film for subsequent forming of air cushions. The web 2', 2" is guided in between the welding drum 10 and a welding band 12 by means of a web guidance roller 31 at the top right of the welding drum 10. After the web 2', 2" has been welded and is exiting from between the welding drum 10 and the welding band 12, another web guidance roller 31 at the top left of the welding drum 10 received the welded web 2', 2" for further handling.

The welding means 11 are during production heated to a temperature preferably in the range of 160° to 190° C, depending on the characteristics of the plastic film material, but lower as well as higher temperatures, such as in the range of 140° to 240° C may be employed. The welding means 11 are heated by means of a heated oil in a buffer tank (not shown) which is circulated to the welding means 11. Alternatively, the welding means 11 may be heated directly by means of electrical heating elements.

The welding band 12 is an endless belt of a fibre reinforced silicone rubber material extending in the width of the welding means 11 for providing a force in the radial direction of the welding drum on the web 2', 2" towards the welding means 11 and thereby ensuring the heat transfer from the welding means 11 to the web 2', 2". The welding band 12 is guided by five band guidance rollers 20, 21, 22, 23 of which two rollers 21, 22 serve as application rollers to apply the welding band 12 to the welding means 11 over approximately 300° of the peripheral of the welding drum during production as shown in figure 1. A tensioning roller 23 is arranged to be displaceable by means of tensioning roller displacement means 70 in order to i.a. ensure the correct tensioning of the welding band 12 during production and thus the correct force to be provided to the web 2', 2". During production, the welding band 12 is driven at a speed about 150 meter per minute by means of a motor (not shown) driving one of the band guidance rollers 20, and the web 2', 2" as well as the periphery of the welding drum 10 are driven at the same speed. The speed may be varied due to considerations regarding the plastic film material.

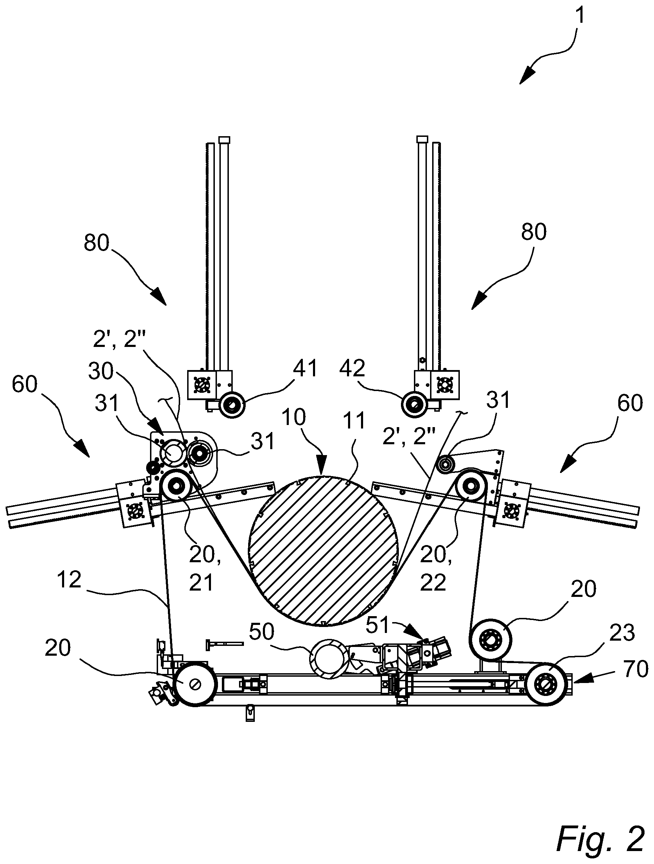

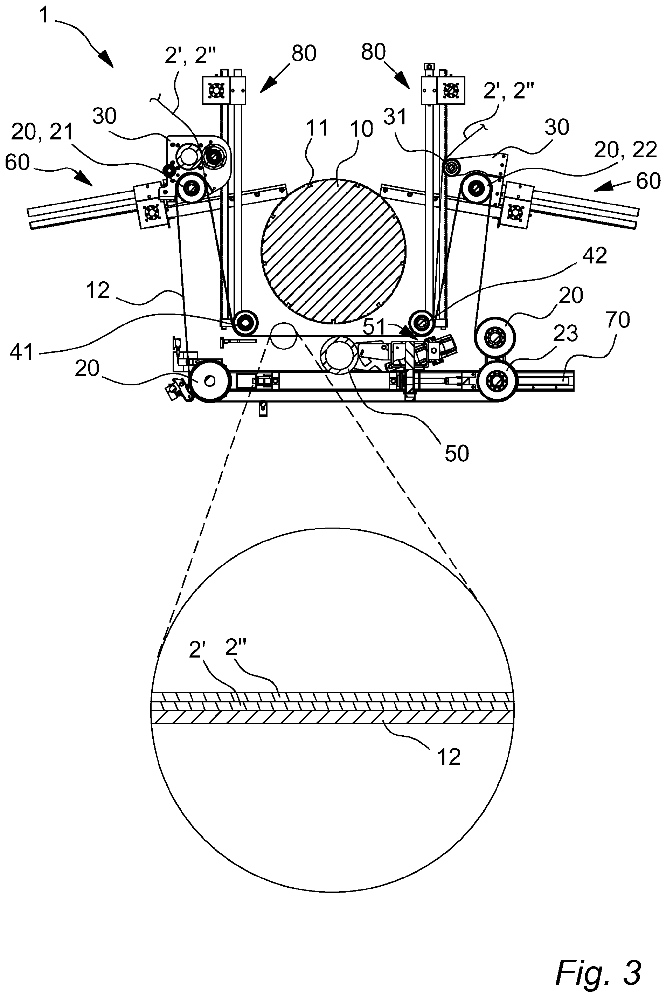

During operation of the welding machine 1, a pressure drum 50 is provided to apply a pressure force on an outer surface of the welding band 12 towards the welding drum 10 where the web 2', 2" is placed between the welding band 12 and the welding drum 10 as shown in figure 1, whereby the welding of the web 2', 2" by means of the heated welding means 11 is improved and the speed of the web 2', 2" through the welding machine 1 may be increased as compared to an otherwise identical welding machine without the pressure drum 50. The pressure drum 50 can be displaced by means of pressure drum displacement means 51 in order to adjust the pressure force applied to the welding band 12 and to displace the pressure drum 50 away from the welding band 12 when production operation of the welding machine 1 is stopped as shown in figure 2 and 3.

When the production operation of the welding machine 1 is to be stopped, the contact between the web 2', 2" and the heated welding means 11 must be interrupted in order to avoid heat damages to the web 2', 2". Figure 2 shows the transition mode to the stop of production as shown in figure 3. In figure 2, the first application roller 21 and the second application roller 22 have been displaced to the sides by means of the application roller displacement means 60 in order to make room for the displacement of the first and second separation rollers 41, 42. The tensioning roller 23 is displaced accordingly by means of the tensioning roller displacement means 70 in order to keep the welding band 12 tensioned so as to avoid slack of the welding band 12, which is still moving together with the web 2', 2" and the welding drum 10. Slack of the welding band 12 while still moving could cause damaged to the welding band 12 as well as other parts of the welding machine 1The pressure drum 50 is displaced away from contact with the welding band 12 by means of the pressure roller displacement means 51 in order to accommodate the separation of the welding band 12 from the welding drum 10 by means of the separation rollers 41, 42 as shown in figure 3.

The next step is shown in figure 3, where the operation of the welding machine 1 has been stopped. The two separation rollers 41, 42 have been displaced in between the welding band 12 and the web 2', 2" on one side and the welding drum 10 on the other side so as to separate the web 2', 2" from the heated welding means 11 of the welding drum 12, and the movement of the web 2', 2", the welding band 12 and the rotation of the welding drum 10 is halted. The web 2', 2" is flush with the welding band 12 between the two separation rollers 41, 42 in order to avoid any slack of the web 2', 2" in order for it to be ready to resume production operation of the welding machine 1.

In order to transition the welding machine 1 from the stop of production shown in figure 1 and back to production mode as shown in figure 1, the movement of the welding band 12 and the web 2', 2" is resumed and the welding drum 10 is rotated to an operational speed, where after the separation rollers 41, 42 are retracted by means of the separation roller displacement means 80. The pressure roller 50 is moved back into contact with the outer side of the welding band 12 and the production mode of the welding machine 1 as shown in figure 1 is resumed.

By providing the welding machine with two separation rollers 41, 42 and by providing the welding machine with application roller displacement means 60 as shown in figures 1 to 3, a simple and linear displacement path of the two separation rollers 41, 42 may be obtained.

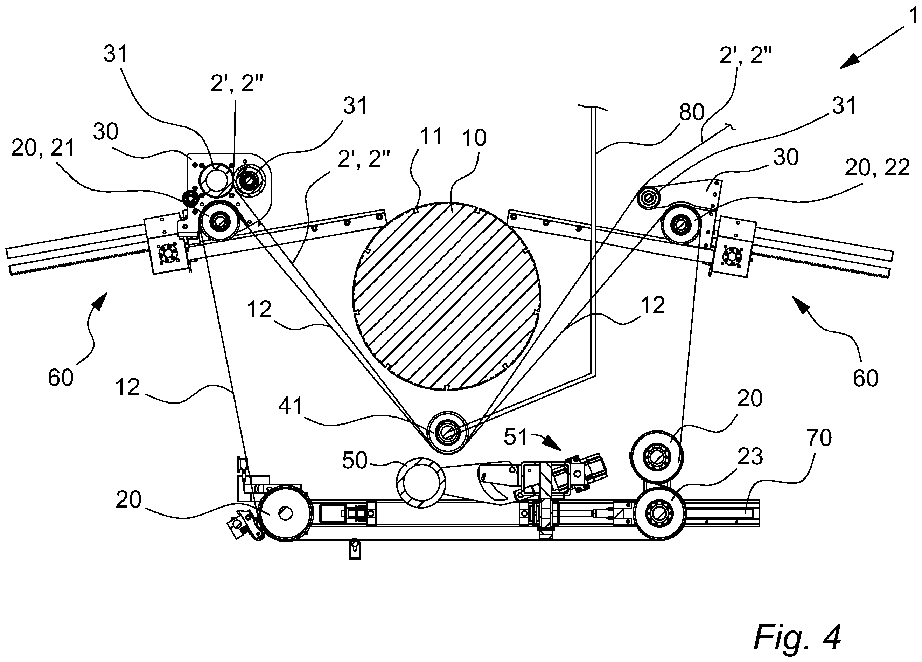

A second embodiment of the welding machine 1 is shown in figure 4 in the stopped position, where only one separation roller 41 is provided. This is also sufficient for the separation of the welding band 12 and the web 2', 2" from the peripheral surface of the welding drum 10, but it requires a more complex displacement path of the separation roller 41 than in the first embodiment shown in figures 1 to 3.

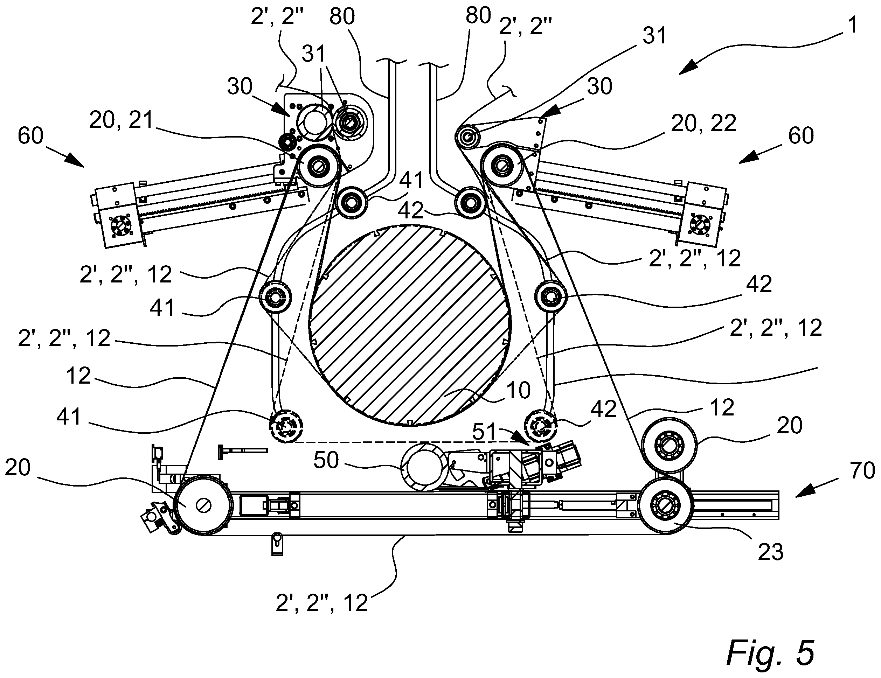

A third embodiment of the welding machine 1 is shown in figure 5 in the stopped position, which compared to the first embodiment shown in figures 1 to 3 lacks the provision of application roller displacement means 60 but comprises two separation rollers 41, 42. In this embodiment, more complex displacement paths of the two separation rollers 41, 42 are required for obtaining the separation of the welding band 12 and the web 2', 2" from the peripheral surface of the welding drum 10.

### Reference numerals

- 1: Welding machine
- 2': First plastic film layer
- 2": Second plastic film layer
- 10: Welding drum
- 11: Welding means
- 12: Welding band
- 20: Band guidance rollers
- 21: First application roller
- 22: Second application roller
- 23: Tensioning roller
- 30: Web guidance arrangement
- 31: Web guidance roller
- 41: First separation roller
- 42: Second separation roller
- 50: Pressure drum
- 51: Pressure drum displacement means
- 60: Application roller displacement means
- 70: Tensioning roller displacement means
- 80: Separation roller displacement means

## Claims

1. Welding machine (1) for continuous welding of two layers of plastic film material (2', 2") together in a welding pattern, the machine comprising
a welding drum (10) which is arranged to be rotated around its axis,
welding means (11) arranged on the peripheral surface of the welding drum (10) and exhibiting the welding pattern,
heating arrangement arranged to heat the welding means (11) to a welding temperature,
an endless welding band (12),
a set of band guidance rollers (20, 21, 22, 23) comprising a first application roller (21) and a second application roller (22) arranged to apply the welding band (12) to the welding means (11) on the surface of the welding drum (10) over a peripheral extend of at least 90°, preferably at least 180° of the welding drum (10) with a force radial to the welding drum (10) in a first operational mode of the welding machine (1), the set of band guidance rollers comprising at least one displaceable tensioning (23) roller for maintaining a tension of the welding band (12),
a web guidance arrangement (30, 31) for guiding the two layers of plastic film material (2', 2") in between the welding drum (10) and the welding band (12), and
control means for controlling the operation of the welding machine (1), **characterized in that**
the machine comprises one or more separation rollers (41, 42), and is arranged in a second operational mode of the welding machine (1) to displace the one or more separation rollers (41, 42) by means of separation roller displacement means (80) controlled by the control means, from a first position thereof and in between the welding means (11) on the peripheral surface of the welding drum (10) and the two layers of plastic film material (2', 2") to a second position of the one or more separation rollers (41, 42) where the two layers of plastic film material (2', 2") and the welding band (12) are separated from the periphery of the welding drum (10) by means of the separation rollers (41, 42).

2. Welding machine (1) according to claim 1 comprising at least two separation rollers (41, 42).

3. Welding machine (1) according to claim 2, which is arranged so that the two layers of plastic film material (2', 2") extend flush with the welding band (12) between the two separation rollers (41, 42) in the second operational mode of the welding machine (1).

4. Welding machine (1) according to any of claims 1 to 3, wherein the welding pattern of the welding means (11) extends in the transverse direction parallel to the axis of the welding drum (10) as well as in the curved direction perpendicularly to the transverse direction and spans at least 180°, preferably at least 270° of the peripheral surface of the welding drum (10).

5. Welding machine (1) according to claim 4, wherein the welding pattern of the welding means (11) is designed to form closed pockets between the two layers of plastic film material (2', 2").

6. Welding machine according to any of claims 1 to 5, wherein the first application roller (21) and the second application roller (22) are arranged to be displaceable by means of application roller displacement means (60) controlled by the control means between a first position thereof in the first operational mode of the welding machine (1) and a second position of the first application roller (21) and the second application roller (22) in the second operational mode of the welding machine (1) to accommodate the displacement of the at least one separation roller (41, 42) from the first position thereof and to the second position of the at least one separation roller (41, 42).

7. Welding machine (1) according to any of claims 1 to 6, wherein the first application roller (21) and the second application roller (22) are arranged to apply the welding band (12) to the welding means (11) on the surface of the welding drum (10) over a peripheral extend of at least 270°, preferably of at least 300° of the welding drum (10).

8. Welding machine (1) according to any of claims 1 to 7, further comprising at least one pressure drum (50) which is arranged to, in the first operational mode of the welding machine, provide a pressure force on the welding band (12) towards the welding drum (10) within the peripheral extend where the welding band (12) is applied to the welding drum (10), wherein the at least one pressure drum (50) is arranged to be displaceable by means of a pressure drum displacement means (51) controlled by the control means, between a first position thereof in the first operational mode of the welding machine (1) and a second position of the pressure roller (50) in the second operational mode of the welding machine (1) to allow for the two layers of plastic film material (2', 2") and the welding band (12) to be separated from the periphery of the welding drum (10) by means of the separation rollers (41, 42).

9. Method of producing a web comprising two layers of plastic film material (2', 2") being welded together in a two-dimensional welding pattern forming pockets between the two layers of plastic film material (2', 2") by use of a welding machine (1) according to any of claims 1 to 8, wherein the welding pattern of the produced web is formed by means of the welding means (11) on the welding drum (12).

10. Method according to claim 9, wherein the pockets formed between the two layers of plastic film material (2', 2") are closed pockets so that the produced web is an air cushion film for subsequent forming of air cushions.

## Patentansprüche

1. Schweißmaschine (1) für kontinuierliches Zusammenschweißen von zwei Schichten aus Kunststofffolienmaterial (2', 2") in einem Schweißmuster, wobei die Maschine Folgendes umfasst:
eine Schweißtrommel (10), die dazu angeordnet ist, um ihre Achse gedreht zu werden,
Schweißmittel (11), die an der Umfangsfläche der Schweißtrommel (10) angeordnet sind und das Schweißmuster aufweisen, Heizanordnung, die dazu angeordnet ist, die Schweißmittel (11) auf eine Schweißtemperatur zu erhitzen,
ein Endlosschweißband (12),
einen Satz von Bandführungsrollen (20, 21, 22, 23), umfassend eine erste Auftragungsrolle (21) und eine zweite Auftragungsrolle (22), die angeordnet sind, um das Schweißband (12) auf die Schweißmittel (11) auf der Oberfläche der Schweißtrommel (10) über eine Umfangserstreckung von zumindest 90°, bevorzugt zumindest 180° der Schweißtrommel (10) mit einer Kraft radial zu der Schweißtrommel (10) in einem ersten Betriebsmodus der Schweißmaschine (1) aufzutragen, wobei der Satz von Bandführungsrollen zumindest eine verschiebbare Spann(23)-Rolle zum Aufrechterhalten einer Spannung des Schweißbands (12) umfasst,
eine Bahnführungsanordnung (30, 31) zum Führen der zwei Schichten aus Kunststofffolienmaterial (2', 2") zwischen der Schweißtrommel (10) und dem Schweißband (12), und
Steuermittel zum Steuern des Betriebs der Schweißmaschine (1), **dadurch gekennzeichnet, dass**
die Maschine eine oder mehrere Trennrollen (41, 42) umfasst und in einem zweiten Betriebsmodus der Schweißmaschine (1) angeordnet ist, um die eine oder die mehreren Trennrollen (41, 42) mittels Trennrollenverschiebungsmitteln (80), die durch die Steuermittel gesteuert werden, von einer ersten Position davon und zwischen den Schweißmitteln (11) auf der Umfangsfläche der Schweißtrommel (10) und den zwei Schichten aus Kunststofffolienmaterial (2', 2") zu einer zweiten Position von der einen oder den mehreren Trennrollen (41, 42), an der die zwei Schichten aus Kunststofffolienmaterial (2', 2") und das Schweißband (12) von dem Umfang der Schweißtrommel (10) mittels der Trennrollen (41, 42) getrennt werden, zu verschieben.

2. Schweißmaschine (1) nach Anspruch 1, umfassend zumindest zwei Trennrollen (41, 42).

3. Schweißmaschine (1) nach Anspruch 2, die angeordnet ist, sodass sich die zwei Schichten aus Kunststofffolienmaterial (2', 2") bündig mit dem Schweißband (12) zwischen den zwei Trennrollen (41, 42) in dem zweiten Betriebsmodus der Schweißmaschine (1) erstrecken.

4. Schweißmaschine (1) nach einem der Ansprüche 1 bis 3, wobei sich das Schweißmuster der Schweißmittel (11) in der Querrichtung parallel zu der Achse der Schweißtrommel (10) sowie in der gekrümmten Richtung senkrecht zu der Querrichtung erstreckt und zumindest 180°, bevorzugt zumindest 270° der Umfangsfläche der Schweißtrommel (10) umspannt.

5. Schweißmaschine (1) nach Anspruch 4, wobei das Schweißmuster der Schweißmittel (11) gestaltet ist, um geschlossene Taschen zwischen den zwei Schichten aus Kunststofffolienmaterial (2', 2'') zu bilden.

6. Schweißmaschine nach einem der Ansprüche 1 bis 5, wobei die erste Auftragungsrolle (21) und die zweite Auftragungsrolle (22) angeordnet sind, um mittels Auftragungsrollenverschiebungsmitteln (60), die durch die Steuermittel gesteuert werden, zwischen einer ersten Position davon in dem ersten Betriebsmodus der Schweißmaschine (1) und einer zweiten Position der ersten Auftragungsrolle (21) und der zweiten Auftragungsrolle (22) in dem zweiten Betriebsmodus der Schweißmaschine (1) verschiebbar zu sein, um die Verschiebung der zumindest einen Trennrolle (41, 42) von der ersten Position davon und zu der zweiten Position der zumindest einen Trennrolle (41, 42) unterzubringen.

7. Schweißmaschine (1) nach einem der Ansprüche 1 bis 6, wobei die erste Auftragungsrolle (21) und die zweite Auftragungsrolle (22) angeordnet sind, um das Schweißband (12) auf die Schweißmittel (11) auf der Oberfläche der Schweißtrommel (10) über eine Umfangserstreckung von zumindest 270°, bevorzugt von zumindest 300° der Schweißtrommel (10) aufzutragen.

8. Schweißmaschine (1) nach einem der Ansprüche 1 bis 7, ferner umfassend zumindest eine Drucktrommel (50), die angeordnet ist, um in dem ersten Betriebsmodus der Schweißmaschine eine Druckkraft auf dem Schweißband (12) in Richtung der Schweißtrommel (10) innerhalb der Umfangserstreckung, in der das Schweißband (12) auf die Schweißtrommel (10) aufgetragen wird, bereitzustellen, wobei die zumindest eine Drucktrommel (50) angeordnet ist, um mittels eines Drucktrommelverschiebungsmittels (51), das durch die Steuermittel gesteuert wird, zwischen einer ersten Position davon in dem ersten Betriebsmodus der Schweißmaschine (1) und einer zweiten Position der Druckrolle (50) in dem zweiten Betriebsmodus der Schweißmaschine (1) verschiebbar zu sein, um zu ermöglichen, dass die zwei Schichten aus Kunststofffolienmaterial (2', 2") und das Schweißband (12) von dem Umfang der Schweißtrommel (10) mittels der Trennrollen (41, 42) getrennt werden.

9. Verfahren zum Produzieren einer Bahn, die zwei Schichten aus Kunststofffolienmaterial (2', 2") umfasst, die in einem zweidimensionalen Schweißmuster, das Taschen zwischen den zwei Schichten aus Kunststofffolienmaterial (2', 2") bildet, durch Verwendung einer Schweißmaschine (1) nach einem der Ansprüche 1 bis 8 zusammengeschweißt werden, wobei das Schweißmuster der produzierten Bahn mittels der Schweißmittel (11) auf der Schweißtrommel (12) gebildet ist.

10. Verfahren nach Anspruch 9, wobei die Taschen, die zwischen den zwei Schichten aus Kunststofffolienmaterial (2', 2") gebildet sind, geschlossene Taschen sind, sodass die produzierte Bahn eine Luftkissenfolie zum anschließenden Bilden von Luftkissen ist.

## Revendications

1. Machine à souder (1) pour le soudage continu de deux couches de film plastique (2', 2") ensemble selon un motif de soudage, la machine comprenant
un tambour de soudage (10) qui est disposé pour être mis en rotation autour de son axe,
un moyen de soudage (11) disposé sur la surface périphérique du tambour de soudage (10) et présentant le motif de soudage, un agencement de chauffage agencé pour chauffer le moyen de soudage (11) à une température de soudage,
une bande de soudage sans fin (12),
un ensemble de rouleaux de guidage de bande (20, 21, 22, 23) comprenant un premier rouleau d'application (21) et un deuxième rouleau d'application (22) agencés pour appliquer la bande de soudage (12) sur le moyen de soudage (11) à la surface du tambour de soudage (10) sur une étendue périphérique d'au moins 90°, de préférence d'au moins 180° du tambour de soudage (10) avec une force radiale au tambour de soudage (10) dans un premier mode de fonctionnement de la machine à souder (1), l'ensemble de rouleaux de guidage de bande comprenant au moins un rouleau de tension (23) déplaçable pour maintenir une tension de la bande de soudage (12),
un agencement de guidage de bande (30, 31) pour guider les deux couches de film plastique (2', 2") entre le tambour de soudage (10) et la bande de soudage (12), et
un moyen de commande pour commander le fonctionnement de la machine à souder (1),
**caractérisé en ce que**
la machine comprend un ou plusieurs rouleaux de séparation (41, 42) et est agencée dans un deuxième mode de fonctionnement de la machine à souder (1) pour déplacer les un ou plusieurs rouleaux de séparation (41, 42) au moyen de moyens de déplacement de rouleaux de séparation (80) commandés par le moyen de commande, à partir d'une première position de ceux-ci et entre le moyen de soudage (11) sur la surface périphérique du tambour de soudage (10) et les deux couches de matériau de film plastique (2', 2") à une deuxième position des un ou plusieurs rouleaux de séparation (41, 42) où les deux couches de matériau de film plastique (2', 2") et la bande de soudage (12) sont séparées de la périphérie du tambour de soudage (10) au moyen des rouleaux de séparation (41, 42).

2. Machine à souder (1) selon la revendication 1 comprenant au moins deux rouleaux de séparation (41, 42).

3. Machine à souder (1) selon la revendication 2, qui est agencée de telle sorte que les deux couches de matériau de film plastique (2', 2") s'étendent au ras de la bande de soudage (12) entre les deux rouleaux de séparation (41, 42) dans le deuxième mode de fonctionnement de la machine à souder (1).

4. Machine à souder (1) selon l'une quelconque des revendications 1 à 3, dans laquelle le motif de soudage du moyen de soudage (11) s'étend dans la direction transversale parallèle à l'axe du tambour de soudage (10) ainsi que dans la direction courbe perpendiculairement à la direction transversale et s'étend sur au moins 180°, de préférence au moins 270° de la surface périphérique du tambour de soudage (10).

5. Machine à souder (1) selon la revendication 4, dans laquelle le motif de soudage du moyen de soudage (11) est conçu pour former des poches fermées entre les deux couches de matériau de film plastique (2', 2").

6. Machine à souder selon l'une quelconque des revendications 1 à 5, dans laquelle le premier rouleau d'application (21) et le deuxième rouleau d'application (22) sont agencés pour être déplaçables au moyen de moyens de déplacement de rouleaux d'application (60) commandés par le moyen de commande entre une première position de ceux-ci dans le premier mode de fonctionnement de la machine à souder (1) et une deuxième position du premier rouleau d'application (21) et du deuxième rouleau d'application (22) dans le deuxième mode de fonctionnement de la machine à souder (1) pour s'adapter au déplacement de l'au moins un rouleau de séparation (41, 42) de la première position de celui-ci et à la deuxième position de l'au moins un rouleau de séparation (41, 42).

7. Machine à souder (1) selon l'une quelconque des revendications 1 à 6, dans laquelle le premier rouleau d'application (21) et le deuxième rouleau d'application (22) sont agencés pour appliquer la bande de soudage (12) au moyen de soudage (11) sur la surface du tambour de soudage (10) sur une étendue périphérique d'au moins 270°, de préférence d'au moins 300° du tambour de soudage (10).

8. Machine à souder (1) selon l'une quelconque des revendications 1 à 7, comprenant en outre au moins un tambour de pression (50) qui est agencé pour, dans le premier mode de fonctionnement de la machine à souder, fournir une force de pression sur la bande de soudage (12) en direction du tambour de soudage (10) dans l'étendue périphérique où la bande de soudage (12) est appliquée au tambour de soudage (10), dans laquelle l'au moins un tambour de pression (50) est agencé pour être déplaçable au moyen d'un moyen de déplacement de tambour de pression (51) commandé par le moyen de commande, entre une première position de celui-ci dans le premier mode de fonctionnement de la machine à souder (1) et une deuxième position du rouleau de pression (50) dans le deuxième mode de fonctionnement de la machine à souder (1) pour permettre aux deux couches de matériau de film plastique (2', 2") et à la bande de soudage (12) d'être séparées de la périphérie du tambour de soudage (10) au moyen des rouleaux de séparation (41, 42).

9. Procédé de production d'une bande comprenant deux couches de matériau de film plastique (2', 2") soudées ensemble selon un motif de soudage bidimensionnel formant des poches entre les deux couches de matériau de film plastique (2', 2") à l'aide d'une machine à souder (1) selon l'une quelconque des revendications 1 à 8, dans lequel le motif de soudage de la bande produite est formé au moyen du moyen de soudage (11) sur le tambour de soudage (12).

10. Procédé selon la revendication 9, dans lequel les poches formées entre les deux couches de matériau de film plastique (2', 2") sont des poches fermées de sorte que la bande produite est un film à coussin d'air pour la formation ultérieure de coussins d'air.
